(19) Europäisches Patentamt
European Patent Office
Office européen des brevets

(11) **EP 2 697 683 B1**

(12) **FASCICULE DE BREVET EUROPEEN**

(45) Date de publication et mention de la délivrance du brevet:
**17.01.2018 Bulletin 2018/03**

(21) Numéro de dépôt: **12722770.0**

(22) Date de dépôt: **11.04.2012**

(51) Int Cl.:
*G02B 27/64* *(2006.01)*       *H04N 5/232* *(2006.01)*
*B60R 1/00* *(2006.01)*        *G01B 11/02* *(2006.01)*
*H04N 7/18* *(2006.01)*        *G01C 11/02* *(2006.01)*

(86) Numéro de dépôt international:
**PCT/FR2012/050782**

(87) Numéro de publication internationale:
**WO 2012/140359 (18.10.2012 Gazette 2012/42)**

(54) **SYSTEME DE STABILISATION D'UN POSITIONNEUR A AXES MOTORISES D'UN EQUIPEMENT, PROCEDE ET APPLICATION**

SYSTEM ZUR STABILISIERUNG EINES POSITIONIERERS MIT MOTORISIERTEN ACHSEN EINES GERÄTETEILS, VERFAHREN UND VERWENDUNG

SYSTEM FOR STABILIZING A POSITIONER WITH MOTORIZED AXES OF AN ITEM OF EQUIPMENT, METHOD AND APPLICATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.04.2011 FR 1153166**

(43) Date de publication de la demande:
**19.02.2014 Bulletin 2014/08**

(73) Titulaire: **Ixblue**
**78100 Saint-Germain-en Laye (FR)**

(72) Inventeur: **VAU, Bernard**
**F-94100 Saint Maur des Fosses (FR)**

(74) Mandataire: **Jacobacci Coralis Harle**
**32, rue de l'Arcade**
**75008 Paris (FR)**

(56) Documents cités:
**EP-A2- 0 878 686       GB-A- 2 345 155**
**US-B1- 6 396 235**

- **Anonymous: "Super-G gyro-stabilized aerial camera system", Nettmann Systems International , 28 janvier 2011 (2011-01-28), XP002659993, CA Extrait de l'Internet: URL:http://web.archive.org/web/20110128114 054/http://www.nettmannsuperg.com [extrait le 2011-09-20]**
- **MATTHEW W RYAN ET AL: "MEMS based AHRS with adaptive bias estimation for high performance rate sensor replacement", POSITION LOCATION AND NAVIGATION SYMPOSIUM (PLANS), 2010 IEEE/ION, 4 mai 2010 (2010-05-04), pages 214-220, XP031706908, PISCATAWAY, NJ, USA,IEEE ISBN: 978-1-4244-5036-7 & MAHONY R ET AL: "Complementary filter design on the special orthogonal group SO(3)", DECISION AND CONTROL, 2005 AND 2005 EUROPEAN CONTROL CONFERENCE. CDC-E CC '05. 44TH IEEE CONFERENCE ON SEVILLE, SPAIN 12-15 DEC. 2005, 12 décembre 2005 (2005-12-12), pages 1477-1484, XP010884960, PISCATAWAY, NJ, USA,IEEE ISBN: 978-0-7803-9567-1**

EP 2 697 683 B1

**Description**

La présente invention concerne un système de stabilisation gyroscopique d'un positionneur à axes motorisés d'un équipement ainsi qu'un procédé correspondant et son application. Elle permet par exemple la stabilisation d'équipements de prises de vues à bord de véhicules soumis à des mouvements. Elle est ainsi adaptée à la gyrostabilisation de positionneurs muni d'au moins deux axes, dénommés parfois positionneurs tourelles Pan et Tilt.

Les tourelles pan et Tilt sont des positionneurs asservis munis de deux axes motorisés, l'axe externe (ou axe pan) étant en général un axe d'azimut (c'est-à-dire un axe vertical lorsque la tourelle est positionnée sur un support horizontal), le second axe (ou axe tilt) est un axe d'élévation.

Ces tourelles sont embarquées sur un véhicule qui peut notamment être un bateau ou un avion, mais également un véhicule terrestre. Ce type de véhicule est amené à effectuer des mouvements en translation et rotation suivant les 6 degrés de liberté. Dans la suite du document, ces mouvements du véhicule seront qualifiés de mouvements porteurs. Les axes de la tourelle sont motorisés. La tourelle est fixée à sa base sur le véhicule.

Sur l'axe interne de la tourelle (axe tilt) est fixé un équipement qui peut par exemple être un système de réception ou, éventuellement, d'émission-réception qui peut notamment être optique ou électromagnétique. Ce système peut, en particulier, être une caméra ou une antenne.

Le rôle de ces positionneurs est de compenser les mouvements porteurs du véhicule de telle sorte que la ligne de visée ou pointage de l'équipement, notamment caméra ou antenne, reste fixe par rapport à un repère terrestre local. Ces positionneurs peuvent être équipés de moyens de stabilisation gyroscopiques propres qui seront qualifiés dans la suite de « intra-positionneur ».

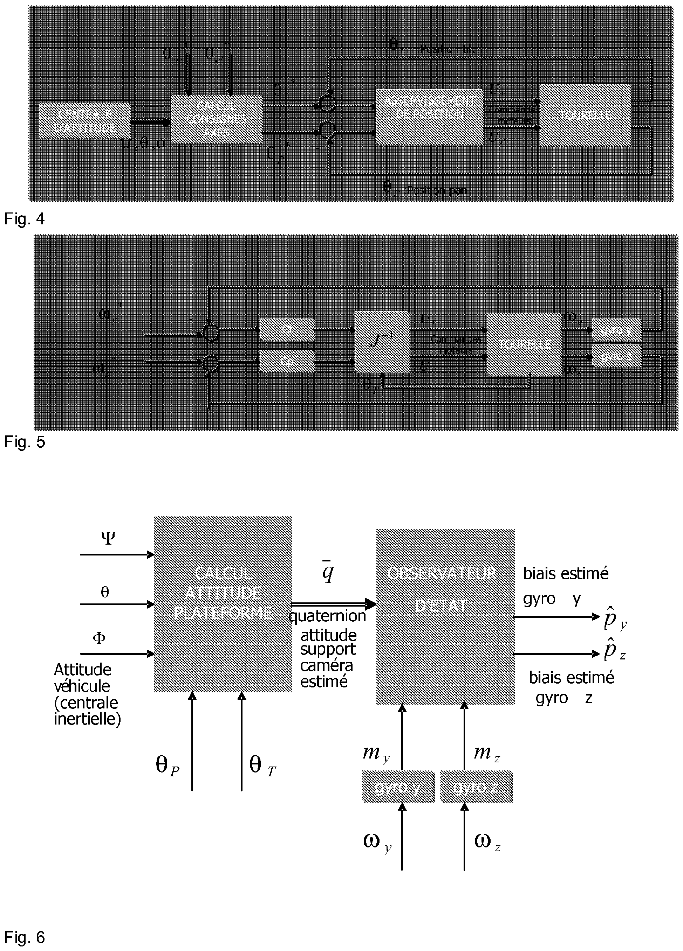

On connaît deux principales méthodes de stabilisation/asservissement-correction intra-positionneur qui sont maintenant présentées en relation avec les Figures 4 et 5.

On connaît également par le document GB2345155A un moyen de gyrostabilisation d'un imageur mettant en oeuvre un filtrage de Kalman. Toutefois, ce sont des données de position (angulaires) qui sont traitées dans le filtre suite à l'intégration des mesures des gyromètres et, en outre, des corrections sont effectuées sur ces données avant traitement à travers le filtre de Kalman. Enfin, il est indiqué qu'un moyen de correction supplémentaire doit être mis en oeuvre pour obtenir une meilleure stabilisation.

On connaît enfin les documents US-6396235 et les articles « Super-G gyro-stabilized aerial camera system » XP002659993 et « MEMS based AHRS with adaptative bias estimation for high performance rate sensor replacement » XP031706908.

Afin de faciliter les explications qui suivent, un certain nombre de notations sont présentées :

$\mathfrak{R}_0$ repère terrestre local (nord, est, bas ou « down »)

$\mathfrak{R}_1$ repère associé au véhicule

$\mathfrak{R}_2$ repère associé au support de la tourelle

$\mathfrak{R}_3$ repère associé à la plateforme supportant la caméra

$\psi$ Lacet du véhicule fourni par la centrale d'attitude du véhicule

$\theta$ tangage du véhicule fourni par la centrale d'attitude du véhicule

roulis du véhicule fourni par la centrale d'attitude du véhicule

$R_{10}$ matrice de passage du repère $\mathfrak{R}_0$ au repère $\mathfrak{R}_1$.

On a:

$$R_{10} = \begin{pmatrix} 1 & 0 & 0 \\ 0 & \cos\phi & \sin\phi \\ 0 & -\sin\phi & \cos\phi \end{pmatrix} \cdot \begin{pmatrix} \cos\theta & 0 & -\sin\theta \\ 0 & 1 & 0 \\ \sin\theta & 0 & \cos\theta \end{pmatrix} \cdot \begin{pmatrix} \cos\psi & \sin\psi & 0 \\ -\sin\psi & \cos\psi & 0 \\ 0 & 0 & 1 \end{pmatrix} \quad (1)$$

Le véhicule est supposé équipé d'une centrale d'attitude, aussi la matrice $R_{10}$ est connue.

$\theta_P$ position angulaire de l'axe pan du positionneur (axe 1)

$\theta_T$ position angulaire de l'axe tilt du positionneur (axe 2)
$\theta_P$ vitesse angulaire de l'axe pan (axe 1)
$\theta_T$ vitesse angulaire de l'axe tilt (axe 2)

$R_{32}$ La matrice de passage du repère 2 au repère 3 (passage du support de la tourelle au support de la caméra).
On a:

$$R_{32} = \begin{pmatrix} \cos\theta_T & 0 & -\sin\theta_T \\ 0 & 1 & 0 \\ \sin\theta_T & 0 & \cos\theta_T \end{pmatrix} \cdot \begin{pmatrix} \cos\theta_P & \sin\theta_P & 0 \\ -\sin\theta_P & \cos\theta_P & 0 \\ 0 & 0 & 1 \end{pmatrix} \quad (2)$$

$R_{21}$ La matrice de passage du repère 1 (repère du véhicule) au repère 2 (repère du support de la tourelle).
On suppose pour simplifier que $R_{21} \approx I_3$ (le support de la tourelle a été aligné sur le repère du véhicule suite à une procédure de calibration).
A noter que l'on a:

$$R_{ij} = R_{ji}^{\ T}$$

$\omega_x$ vitesse de rotation instantanée du support de la caméra suivant l'axe x
$\omega_y$ vitesse de rotation instantanée du support de la caméra suivant l'axe y
$\omega_z$ vitesse de rotation instantanée du support de la caméra suivant l'axe z

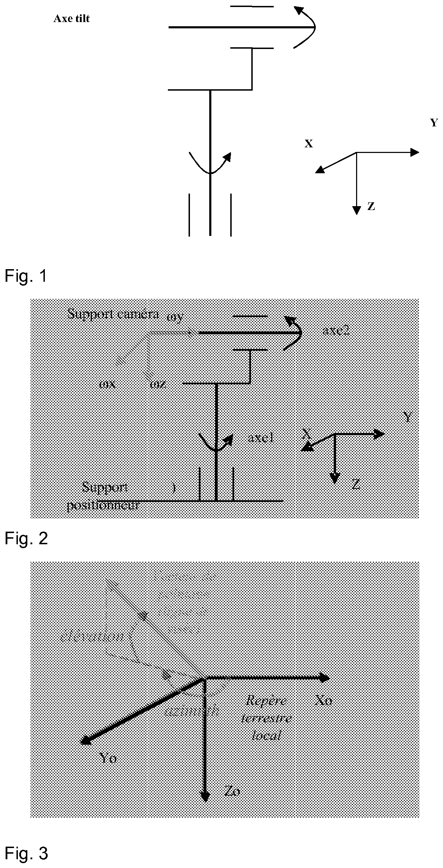

Le schéma structurel du positionneur avec sa caméra est donné à la Figure 2.
$R_{30}$ Matrice de passage du repère terrestre local au repère du support de la caméra. On a:

$$R_{30} = R_{32} \cdot R_{21} \cdot R_{10}$$
$$R_{30} \approx R_{32} \cdot R_{10} \quad (3)$$

$q$ quaternion de l'attitude du support de la caméra par rapport au repère terrestre.
On pose:

$$q = \begin{pmatrix} a \\ b \\ c \\ d \end{pmatrix}$$

$a, b, c, d$ composantes du quaternion. Le quaternion d'attitude est normalisé:

$$a^2 + b^2 + c^2 + d^2 = 1$$

$R_{30}$ peut être exprimé en fonction de $\psi, \theta, \phi, \theta_P, \theta_T$, mais peut être exprimé également à partir des composantes de $q$, soit :

$$R_{03} = \begin{pmatrix} a^2 + b^2 - c^2 - d^2 & 2(bc - ad) & 2(bd + ac) \\ 2(bc + ad) & a^2 - b^2 + c^2 - d^2 & 2(cd - ab) \\ 2(bd - ac) & 2(cd + ab) & a^2 - b^2 - c^2 + d^2 \end{pmatrix} \quad (4)$$

On a:

$$R_{03} = R_{30}{}^{T} \quad (5)$$

Le vecteur de pointage (ligne de visée de la caméra) est le vecteur X du repère $\mathcal{R}_3$.

Ce vecteur de pointage (vecteur unitaire), peut être exprimé par rapport au repère terrestre local au moyen d'une composante d'azimut et d'élévation.

$\theta_{az}$ Angle d'azimut du vecteur de pointage,
$\theta_{el}$ Angle d'élévation du vecteur de pointage.

La Figure 3 donne un schéma montrant les relations entre le repère terrestre et le vecteur de pointage.

Par la manipulation des matrices de passage on montre que l'on a la relation:

$$\begin{pmatrix} \cos\theta_{el} \cdot \cos\theta_{az} \\ \cos\theta_{el} \cdot \sin\theta_{az} \\ -\sin\theta_{el} \end{pmatrix} = R_{03} \cdot \begin{pmatrix} 1 \\ 0 \\ 0 \end{pmatrix} \quad (6)$$

Après ces annotations, on va maintenant présenter les techniques connues de stabilisation.

L'objectif de la gyrostabilisation est de maintenir constante la ligne de visée de l'équipement porté par le positionneur par rapport au repère terrestre, cela malgré les mouvements porteurs du véhicule.

C'est-à-dire que l'on cherche à maintenir constants l'azimut et l'élévation du vecteur de pointage : $\theta_{az}$ et $\theta_{el}$.

Les axes pan et tilt de la tourelle sont commandés par des moteurs électriques, en général des moteurs à courant continu sans balai (« DC brushless ») dont le couple est proportionnel à la commande en courant qu'ils reçoivent. Ces moteurs/axes comportent généralement des codeurs angulaires permettant de connaître la position angulaire des axes commandés.

L'état de l'art comporte essentiellement deux méthodes de stabilisation.

La première méthode représentée Figure 4, consiste à réaliser sur chacun des axes pan et tilt des asservissements de position angulaire, les axes commandés comportant des codeurs angulaires.

En appelant:

$\theta_P{}^*$ la consigne sur l'axe pan,

$\theta_T{}^*$ la consigne sur l'axe tilt,

$\theta_{az}{}^*$ la consigne de l'azimut du vecteur de pointage,

$\theta_{el}{}^*$ la consigne de l'élévation du vecteur de pointage,

la loi de commande consiste à calculer $\theta_P{}^*$ et $\theta_T{}^*$ à partir des consignes $\theta_{az}{}^*$ et $\theta_{el}{}^*$, la matrice $R_{10}$ étant connue car donnée par la centrale d'attitude du véhicule.

L'asservissement (monovariable) des axes pan et tilt ne présente aucune difficulté et la structure de la loi de commande est représentée sur la Figure 4.

Cette première méthode est simple à mettre en oeuvre mais elle aboutit à une qualité de stabilisation assez médiocre pour plusieurs raisons:

- On a fait l'hypothèse $R_{21} = I_3$ résultant d'une procédure d'alignement du support de la tourelle par rapport au repère du véhicule. Cet alignement n'est jamais parfait et il en résulte une stabilité de pointage dégradée.
- La liaison physique entre la centrale d'attitude et le positionneur n'est pas nécessairement rigide ou stable car le positionneur peut être installé à une distance assez importante de la centrale d'attitude (10 m par ex.), sur un support (par ex. un mât) un peu flexible par rapport au repère du véhicule et les variations de liaison entraînent une dégradation de la correction.
- La « bande passante » de la centrale est généralement assez faible: les mouvements perturbateurs dont la fréquence excède les quelques Hertz ne sont pas perçus par la centrale, et à fortiori non corrigés.
- La dynamique de suivi de consigne des asservissements de position peut aussi être un obstacle si elle est trop basse.

Pour essayer de remédier à ces inconvénients on a proposé d'installer la centrale d'attitude sur la base du positionneur et d'utiliser les informations issues de celle-ci afin de calculer les consignes de position des axes Pan et Tilt. Cette variante donne de meilleurs résultats puisque l'on mesure directement les mouvements porteurs affectant le positionneur. Elle présente un inconvénient majeur qui est d'ordre économique : le surcoût engendré par la centrale peut alors être très important.

La seconde méthode représentée Figure 5, consiste à mettre en oeuvre une correction locale, intra-positionneur, au niveau du positionneur. Pour cela, on place deux gyromètres sur les axes Z et Y du support de la caméra (au plus près de celle-ci) afin de mesurer les vitesses de rotation instantanées $\omega_y$, $\omega_z$.

On réalise alors deux asservissements de vitesse afin de maintenir les consignes de vitesse $\omega_y{}^*$, $\omega_z{}^*$ telles que $\omega_y{}^* = 0, \omega_z{}^* = 0$.

Dans le cas particulier où le support du positionneur est en position fixe sur le véhicule, on a:

$$\begin{pmatrix} \omega_y \\ \omega_z \end{pmatrix} = \begin{pmatrix} 1 & 0 \\ 0 & \cos\theta_T \end{pmatrix} \cdot \begin{pmatrix} \dot{\theta}_T \\ \dot{\theta}_P \end{pmatrix}$$

$$\begin{pmatrix} \omega_y \\ \omega_z \end{pmatrix} = J \cdot \begin{pmatrix} \dot{\theta}_T \\ \dot{\theta}_P \end{pmatrix} \tag{7}$$

$$\theta_T = \pm\frac{\pi}{2}$$

où $J$ est la matrice Jacobienne du positionneur qui est singulière pour:

La loi de commande correspondante est représentée Figure 5 où $Cp$ et $Ct$ sont les correcteurs de vitesse respectivement sur les axes pan et tilt. Les correcteurs $Cp$ et $Ct$ peuvent être synthétisés suivant des méthodes connues dans le domaine, qu'elles soient classiques (PID : « proportionnel intégral dérivé »), ou plus avancées notamment (LQG (Commande linéaire quadratique gaussienne) H∞(Hinfini) ou de placement des pôles) et que l'on ne détaille pas ici.

Cette seconde méthode présente l'intérêt de réguler les vitesses au plus près de la caméra: Il en résulte une meilleure qualité de la stabilisation de l'image. Elle permet également de rejeter des perturbations à des fréquences bien plus élevées que dans la première méthode. Elle est donc préférable de ce point de vue à la première méthode.

Cependant, cette seconde méthode possède un inconvénient majeur car les gyromètres possèdent un biais, en première approximation constant, qui entraîne une dérive sur $\theta_{az}$ et $\theta_{el}$ et donc sur le pointage lorsque les asservissements de vitesse sont fonctionnels.

Les performances de la seconde méthode dépendent donc fortement de la qualité des gyromètres utilisés. Or, plus le biais des gyromètres est réduit, plus leur encombrement est important, et plus leur coût est élevé. A titre d'exemple, le tableau suivant donne le coût pour trois gyromètres en fonction du niveau de biais.

| BIAIS GYRO (°/s) | COUT (dièdre) (€) |
|---|---|
| 10 °/s | 15€ |

(suite)

| BIAIS GYRO (°/s) | COUT (dièdre) (€) |
|---|---|
| 1 °/s | 150€ |
| 0.1 °/s | 1500€ |

Il est souhaitable de mettre en oeuvre des moyens qui permettent une stabilisation du positionneur de qualité pour un coût réduit. Or, dans certains cas, le véhicule peut comporter d'origine une centrale d'attitude donnant des mesures d'attitude du véhicule et l'utilisation de ces mesures pourrait aussi être considérée pour l'amélioration de la stabilisation des moyens propres, intra-positionneur, de stabilisation du positionneur. Dans d'autres cas, le véhicule ne comporte pas de centrale d'attitude d'origine et l'utilisation de mesures d'attitude du véhicule nécessite l'installation d'une centrale d'attitude sur le véhicule dont le coût peut encore être bien plus conséquent pour des mesures précises.

L'invention propose d'utiliser des mesures d'attitude du véhicule obtenues par une centrale d'attitude du véhicule ou, plus généralement, par un moyen de mesure de l'attitude du véhicule, dont la qualité de mesure n'a pas besoin d'être élevée, pour améliorer les performances de moyens propres, intra-positionneur, de stabilisation d'un positionneur et, ceci, avec des capteurs gyrométriques du positionneur dont la qualité de mesure n'a pas besoin d'être élevée. Il en résulte que des moyens de mesure à bas coût peuvent être utilisés aussi bien pour le positionneur d'équipement que la centrale d'attitude du véhicule, en particulier lorsqu'elle est ajoutée au véhicule.

La présente invention propose un système perfectionné de stabilisation gyroscopique pour positionneur d'équipement qui tire profit d'une centrale d'attitude du véhicule d'origine ou rajoutée pour les besoins de la cause, et améliore les performances de stabilisation, notamment celles de moyens propres, intra-positionneur, de stabilisation du positionneur.

L'invention concerne donc un système de stabilisation d'un positionneur d'équipement à axes motorisés, le positionneur s'orientant sous l'action d'une consigne d'orientation selon une ligne de visée/pointage, ledit positionneur étant installé sur un véhicule, le véhicule subissant des mouvements dits mouvements porteurs, le positionneur comportant des codeurs angulaires produisant des mesures angulaires ($\theta_p$ , $\theta_t$) pour ses axes commandés et un ensemble de capteurs gyrométriques produisant des mesures de vitesses de rotation instantanée d'équipement ($m_y$, $m_z$), lesdits capteurs gyrométriques présentant des biais ($P_y$ , $P_z$), le positionneur comportant des capteurs gyrométriques pour au moins deux axes (y) (z) du repère de l'équipement, le positionneur comportant une unité de calcul avec des moyens d'asservissement-correction intra-positionneur des vitesses de rotation instantanées de l'équipement utilisant des mesures et la consigne d'orientation pour stabiliser l'équipement selon la ligne de visée, le système comportant installé dans le véhicule un moyen de mesure de l'attitude du véhicule donnant des mesures d'attitude du véhicule.

Selon l'invention, le système comporte des moyens de calcul pour commander le positionneur selon une loi de commande permettant de corriger les biais ($\hat{p}_y$ , $\hat{p}_z$) grâce à des informations d'attitude du véhicule et en mettant en oeuvre un observateur d'état combinant une estimation d'attitude d'équipement ($\bar{q}$) et les mesures de vitesses de rotation d'équipement ($m_y$, $m_z$) afin de déterminer les biais des capteurs gyrométriques du positionneur et de les corriger au sein de la loi de commande, l'estimation d'attitude d'équipement ($\bar{q}$) étant obtenue par calcul dans les moyens de calcul du système à partir des mesures d'attitude du véhicule ($\psi$, $\theta$, $\Phi$) et des mesures angulaires ($\theta_p$, $\theta_t$) des axes de positionnement commandés du positionneur.

Dans divers modes de mise en oeuvre de l'invention, les moyens suivants pouvant être utilisés seuls ou selon toutes les combinaisons techniquement possibles, sont employés :

- le véhicule comporte un moyen de mesure de l'attitude du véhicule qui est une centrale d'attitude,
- le véhicule est pré-équipé d'une centrale d'attitude ou, plus généralement, d'un moyen de mesure de l'attitude du véhicule,
- on installe une centrale d'attitude ou, plus généralement, un moyen de mesure d'attitude de véhicule, le véhicule n'en étant pas pré-équipé,
- la centrale ou, plus généralement, le moyen de mesure d'attitude du véhicule est installé au voisinage de la base du positionneur fixée au véhicule,
- la centrale ou, plus généralement, le moyen de mesure d'attitude du véhicule est à bas coût, dont la précision angulaire peut être de l'ordre du degré,
- la centrale ou, plus généralement, le moyen de mesure d'attitude du véhicule est à distance de la base du positionneur,
- la centrale ou, plus généralement, le moyen de mesure d'attitude du véhicule est à la base du positionneur,
- la consigne d'orientation est une consigne de vitesse de rotation instantanée,
- les codeurs angulaires sont des capteurs spécifiques donnant des mesures angulaires,

- le positionneur comporte deux capteurs gyrométriques selon les axes y et z du repère de l'équipement à stabiliser, notamment caméra ou autre équipement,
- le positionneur comporte deux axes commandés motorisés qui sont selon les axes pan (p)/horizontal (y) et tilt (t)/vertical (z),
- les moyens d'asservissement-correction intra-positionneur de l'unité de calcul sont basés sur un correcteur de vitesse de rotation instantanée d ($C_t$, $C_p$) sur chacun desdits au moins deux axes de l'équipement à stabiliser, notamment caméra ou autre équipement,
- les moyens d'asservissement-correction intra-positionneur de l'unité de calcul sont basés sur un correcteur de vitesse de rotation instantanée ($C_t$, $C_p$) sur chacun desdits au moins deux axes (y) et (z) dans le repère de l'équipement s'appliquant à la matrice Jacobienne inversée ($J^{-1}$) du positionneur et avec rétroaction de mesures de vitesses de rotation d'équipement ($m_y$, $m_z$), ladite matrice Jacobienne dépendant de mesures angulaires ($\theta_p$, $\theta_t$) des codeurs du positionneur.
- les correcteurs *Cp* et *Ct* de vitesse de rotation instantanée des moyens d'asservissement-correction intra-positionneur selon les axes (y) (z) du système à positionner sont synthétisés par une technique de calcul d'asservissement, classique (PID) ou avancée,
- les correcteurs *Cp* et *Ct* sont synthétisés suivant une méthode choisie parmi notamment le PID : « proportionnel intégral dérivé », LQG : Commande linéaire quadratique gaussienne, H∞(Hinfini) ou de placement des pôles,
- le système comporte en outre un correcteur de dérive de pointage dont la constante de temps est grande par rapport à la constante de temps des boucles de calcul des moyens d'asservissement-correction intra-positionneur,
- le correcteur de dérive de pointage met en oeuvre dans les moyens de calcul une structure de calcul en rétroaction (« feedback ») et en anticipation (« feedforward ») à partir de l'attitude d'équipement ($\overline{q}$) estimée et agissant sur la consigne de vitesse de rotation instantanée destinée à l'asservissement-correction intra-positionneur,
- le positionneur est une tourelle ne comportant que deux moyens d'orientation d'axe commandés, un premier de type pan/horizontal et un second de type tilt/vertical et deux capteurs gyrométriques mesurant les vitesses de rotation instantanée suivant les axes y et z de l'équipement à stabiliser, la consigne de vitesse de rotation pour l'asservissement-correction intra-positionneur étant selon lesdits deux axes,
- la consigne en vitesse $\omega_y^*$ $\omega_z^*$ compensant les biais et donc la dérive de pointage et destinée aux moyens d'asservissement-correction intra-positionneur est calculée à partir à partir de la consigne de vitesse de rotation instantanée $\omega_y^r$ $\omega_z^r$ provenant d'un utilisateur et des estimées des biais $\hat{p}_y$, $\hat{p}_z$ par application d'une loi de commande correspondant à :

$$\begin{pmatrix} \omega_y^* \\ \omega_z^* \end{pmatrix} = \begin{pmatrix} -\hat{p}_y \\ -\hat{p}_z \end{pmatrix} - \frac{1}{Tc} \cdot M^T(\overline{q}) \cdot \begin{pmatrix} Z_1 - Z_1^r \\ Z_2 - Z_2^r \\ Z_2 - Z_3^r \end{pmatrix} + \begin{pmatrix} \omega_y^r \\ \omega_z^r \end{pmatrix}$$

où

$Z_i^r$ i=1, 2, 3 sont les coordonnées de la consigne du vecteur de pointage dans le repère terrestre,

$Z_1$, $Z_2$, $Z_3$ sont les coordonnées du vecteur de pointage dans le repère terrestre,

$M^T$ est une matrice (2*3) dont les éléments sont exprimés à partir des composantes du quaternion d'attitude $\overline{q}$ estimé de l'attitude de l'équipement

Tc est un paramètre de réglage, réel, supérieur à 0,

- le positionneur comporte trois capteurs gyrométriques disposés selon un trièdre,
- le positionneur est une tourelle et ne comporte que deux moyens d'orientation d'axe commandés, un premier de type pan/horizontal et un second de type tilt/vertical et trois capteurs gyrométriques en trièdre,
- les capteurs gyrométriques sont placés au plus près de l'équipement à stabiliser,
- le positionneur comporte en outre un capteur gyrométrique supplémentaire pour l'axe de roulis placé sur l'axe x de l'équipement à stabiliser et produisant des mesures de vitesse de rotation d'équipement en roulis ($m_x$), les trois capteurs gyrométriques étant disposés selon un trièdre, et l'équipement est un appareil de prise de vue électronique comportant des moyens de traitement d'image dont au moins de traitement en rotation d'image et les moyens de calcul permettent en outre de corriger et commander la rotation de l'image afin de supprimer l'effet du roulis du véhicule à partir des mesures de vitesse de rotation d'équipement en roulis ($m_x$) et de l'estimation d'attitude d'équipement ($\bar{q}$),

- le positionneur comporte en outre une motorisation d'orientation commandée d'axe en rotation de type roulis et un capteur gyrométrique correspondant, et les moyens de calcul permettent en outre de corriger et commander ladite motorisation d'orientation d'axe en rotation de type roulis,
- le positionneur comporte trois axes commandés motorisés,
- le positionneur comporte trois axes commandés motorisés qui sont selon les axes pan (p)/horizontal (y), tilt (t)/vertical (z) et en roulis (x),
- le positionneur comporte trois moyens d'orientation d'axe commandé, un premier de type pan/horizontal, un deuxième de type tilt/vertical et un troisième en roulis (x), ledit moyen d'orientation en roulis comportant un codeur angulaire produisant des mesures angulaires ($\theta_r$) pour ledit axe commandé, le positionneur comportant trois capteurs gyrométriques pour lesdits trois axes et produisant des mesures de vitesses de rotation d'équipement ($m_y$, $m_z$, $m_x$), les trois capteurs gyrométriques étant disposés selon un trièdre, et la consigne d'orientation est selon lesdits trois axes,
- la consigne d'orientation est limitée aux deux axes pan/horizontal et tilt/vertical, la consigne d'orientation selon l'axe en roulis étant une valeur constante,
- l'équipement est un appareil de prise de vues, notamment une caméra,
- l'équipement comporte une antenne,
- l'équipement est une source lumineuse, notamment laser,
- l'unité de calcul et les moyens de calcul sont des calculateurs distincts,
- l'unité de calcul et les moyens de calcul sont en un seul calculateur,
- les moyens de calcul sont dans l'unité de calcul,
- l'unité de calcul est un calculateur unique,
- l'unité de calcul résulte de l'association de plusieurs calculateurs,
- les calculateurs de l'unité de calcul résultant de l'association de plusieurs calculateurs sont dans des emplacements différents,
- de préférence au moins un des calculateurs est en relation de voisinage avec le positionneur, ledit calculateur en relation de voisinage avec le positionneur comportant les moyens de calcul de correction intra-positionneur,
- le véhicule est un véhicule terrestre,
- le véhicule est un véhicule aérien,
- le véhicule est un véhicule maritime.

Un procédé de correction de biais et un procédé de correction de dérive de pointage éventuellement combinés peuvent également être considérés dans le cadre de l'invention.

Plus particulièrement, on considère également un procédé de stabilisation d'un positionneur d'équipement à axes motorisés, le positionneur s'orientant sous l'action d'une consigne d'orientation selon une ligne de visée/pointage, ledit positionneur étant installé sur un véhicule, le véhicule subissant des mouvements dits mouvements porteurs, le positionneur d'équipement comportant des codeurs angulaires produisant des mesures angulaires ($\theta_p$, $\theta_t$) pour ses axes commandés et un ensemble de capteurs gyrométriques produisant des mesures de vitesses de rotation instantanée d'équipement ($m_y$, $m_z$), lesdits capteurs gyrométriques présentant des biais ($p_y$, $p_z$), le positionneur comportant des capteurs gyrométriques pour au moins deux axes (y) (z) du repère de l'équipement, le positionneur comportant une unité de calcul avec des moyens d'asservissement-correction intra-positionneur des vitesses de rotation instantanées de l'équipement utilisant des mesures et la consigne d'orientation pour stabiliser l'équipement selon la ligne de visée, un moyen de mesure de l'attitude du véhicule donnant des mesures d'attitude du véhicule étant installé dans le véhicule. On met en oeuvre des moyens de calcul pour commander le positionneur selon une loi de commande permettant de corriger les biais ($\hat{p}_y$, $\hat{p}_z$) grâce à des informations d'attitude du véhicule et on y met en oeuvre un observateur d'état combinant une estimation d'attitude d'équipement ($\bar{q}$) et les mesures de vitesses de rotation d'équipement ($m_y$, $m_z$) afin de déterminer les biais des capteurs gyrométriques du positionneur et de les corriger au sein de la loi de commande, et l'estimation d'attitude d'équipement ($\bar{q}$) est obtenue par calcul dans les moyens de calcul à partir des mesures d'attitude du véhicule ($\psi$, $\theta$, $\Phi$) et des mesures angulaires ($\theta_p$, $\theta_t$) des axes de positionnement commandés du positionneur.

Le procédé en question peut être décliné selon toutes les modalités opérationnelles, possiblement combinées, du système.

L'invention concerne enfin diverses applications dont une consistant à équiper un véhicule non équipé avec un positionneur, un moyen de mesure de l'attitude du véhicule et les moyens de calcul, dont une autre consiste à équiper un véhicule pré-équipé d'un positionneur avec un moyen de mesure de l'attitude du véhicule et les moyens de calcul, et dont encore une autre consiste à équiper un véhicule pré-équipé d'un positionneur et d'un moyen de mesure de l'attitude du véhicule avec les moyens de calcul.

Plus précisément, on prévoit une application du système de l'invention pour la mise en oeuvre du procédé de l'invention dans laquelle le véhicule est pré-équipé avec un positionneur d'équipement à axes motorisés, le positionneur s'orientant sous l'action d'une consigne d'orientation selon une ligne de visée/pointage, ledit positionneur étant installé sur un véhicule, le véhicule subissant des mouvements dits mouvements porteurs, le positionneur comportant des codeurs angulaires produisant des mesures angulaires ($\theta_p$, $\theta_t$) pour ses axes commandés et un ensemble de capteurs gyrométriques produisant des mesures de vitesses de rotation instantanée d'équipement ($m_y$, $m_z$), lesdits capteurs gyrométriques présentant des biais ($\hat{p}_y$, $\hat{p}_z$), le positionneur comportant des capteurs gyrométriques pour au moins deux axes (y) (z) du repère de l'équipement, le positionneur comportant une unité de calcul avec des moyens d'asservissement-correction intra-positionneur des vitesses de rotation instantanées de l'équipement utilisant des mesures et la consigne d'orientation pour stabiliser l'équipement selon la ligne de visée, et on équipe le véhicule pré-équipé avec un moyen de mesure de l'attitude du véhicule donnant des mesures d'attitude du véhicule et avec des moyens de calcul pour commander le positionneur selon une loi de commande permettant de corriger les biais ($\hat{p}_y$, $\hat{p}_z$) grâce à des informations d'attitude du véhicule et en mettant en oeuvre un observateur d'état combinant une estimation d'attitude d'équipement ($\bar{q}$) et les mesures de vitesses de rotation d'équipement ($m_y$, $m_z$) afin de déterminer les biais des capteurs gyrométriques du positionneur et de les corriger au sein de la loi de commande, l'estimation d'attitude d'équipement ($\bar{q}$) étant obtenue par calcul dans les moyens de calcul du système à partir des mesures d'attitude du véhicule ($\psi$, $\theta$, $\Phi$) et des mesures angulaires ($\theta_p$, $\theta_t$) des axes de positionnement commandés du positionneur.

Plus précisément, on prévoit une application du système de l'invention pour la mise en oeuvre du procédé de l'invention dans laquelle on équipe un véhicule non équipé du système avec :

- un positionneur d'équipement à axes motorisés, le positionneur s'orientant sous l'action d'une consigne d'orientation selon une ligne de visée/pointage, ledit positionneur étant installé sur un véhicule, le véhicule subissant des mouvements dits mouvements porteurs, le positionneur comportant des codeurs angulaires produisant des mesures angulaires ($\theta_p$, $\theta_t$) pour ses axes commandés et un ensemble de capteurs gyrométriques produisant des mesures de vitesses de rotation instantanée d'équipement ($m_y$, $m_z$), lesdits capteurs gyrométriques présentant des biais ($p_y$, $p_z$), le positionneur comportant des capteurs gyrométriques pour au moins deux axes (y) (z) du repère de l'équipement, le positionneur comportant une unité de calcul avec des moyens d'asservissement-correction intra-positionneur des vitesses de rotation instantanées de l'équipement utilisant des mesures et la consigne d'orientation pour stabiliser l'équipement selon la ligne de visée,
- un moyen de mesure de l'attitude du véhicule donnant des mesures d'attitude du véhicule, et
- des moyens de calcul pour commander le positionneur selon une loi de commande permettant de corriger les biais ($\hat{p}_y$, $\hat{p}_z$) grâce à des informations d'attitude du véhicule et en mettant en oeuvre un observateur d'état combinant une estimation d'attitude d'équipement ($\bar{q}$) et les mesures de vitesses de rotation d'équipement ($m_y$, $m_z$) afin de déterminer les biais des capteurs gyrométriques du positionneur et de les corriger au sein de la loi de commande, l'estimation d'attitude d'équipement ($\bar{q}$) étant obtenue par calcul dans les moyens de calcul du système à partir des mesures d'attitude du véhicule ($\psi$, $\theta$, $\Phi$) et des mesures angulaires ($\theta_p$, $\theta_t$) des axes de positionnement commandés du positionneur.

La présente invention, sans qu'elle en soit pour autant limitée, va maintenant être exemplifiée avec la description qui suit de modes de réalisation et de mise en oeuvre en relation avec :

- la Figure 1 qui représente un schéma structurel d'un positionneur deux axes,
- la Figure 2 qui représente un schéma du positionneur avec repère associé à un équipement qui est une caméra,
- la Figure 3 qui représente le repère terrestre local et le vecteur de pointage,
- la Figure 4 qui représente la loi de commande d'une première méthode de stabilisation connue,
- la Figure 5 qui représente la loi de commande d'une seconde méthode de stabilisation connue,
- la Figure 6 qui représente le principe de calcul de l'estimation des biais sur les gyromètres,
- la Figure 7 qui représente la structure de la loi de commande de correction des biais et de dérive de pointage des gyromètres, et
- la Figure 8 qui représente la structure de la loi de commande de correction des biais et de dérive de pointage des gyromètres avec correction du roulis.

Pour simplifier les explications qui suivent on considérera essentiellement une plateforme ou tourelle à deux axes commandés comme représenté Figure 1 : un premier axe pan (p)/horizontal (y) et un second axe tilt (t)/vertical (z) mais on verra que l'invention peut être étendue à trois axes en y ajoutant un axe permettant de corriger le roulis ou une correction logicielle externe du roulis (rotation d'image). De même, l'équipement considéré pour les explications est un appareil de prise de vues ou caméra.

A la base, elle est mise en oeuvre en association avec la seconde méthode, c'est-à-dire qu'elle est combinée à un stabilisateur local, intra-positionneur. On verra cependant que ce stabilisateur local n'intervient pas directement dans la loi de commande de l'invention. En pratique, le stabilisateur local, intra-positionneur, est présent et utilisé car l'invention doit mettre en oeuvre des gyromètres sur le positionneur et la présence de tels gyroscopes autorise n'importe comment la mise en oeuvre d'un stabilisateur local, intra-positionneur.

Le principe à la base de l'invention consiste à doter la tourelle de gyromètres, typiquement un trièdre de gyromètres, au plus près de la caméra selon le principe de la seconde méthode présentée ci-dessus mais ces gyromètres sont choisis de très bas coût, par exemple en utilisant des gyromètres de types MEMS. Ces gyromètres à bas coût présentent donc des biais importants, typiquement de l'ordre de 1 °/s, qui rendraient une gyrostabilisation par la seconde méthode très mauvaise du fait des dérives importantes en résultant. La présente invention permet de corriger les effets de ces biais des gyromètres.

Outre l'avantage en termes de coût, ces gyromètres ont un encombrement très réduit et ne pèsent seulement quelques grammes.

Ces gyromètres à biais élevé sont insérés dans des asservissements de vitesse, permettant de compenser de manière très énergique les mouvements porteurs affectant la tourelle.

La correction des effets de ces biais des gyromètres est obtenue par l'utilisation des informations de la centrale d'attitude du véhicule, que l'on combine avec les informations des codeurs de la tourelle afin d'avoir une estimation de l'attitude de la caméra dans le repère terrestre local.

L'estimée de l'attitude de la caméra est fusionnée avec les mesures gyrométriques au moyen d'un observateur d'état qui peut être un filtre de Kalman, afin d'estimer le biais des gyromètres.

Ces biais estimés sont ensuite soustraits aux mesures des gyromètres dans les asservissements de vitesse.

Grâce à l'invention, on peut compenser en grande partie l'effet des biais des gyromètres bas coûts, tout en ayant l'avantage d'un asservissement en vitesse très nerveux réalisé au moyen de capteurs situés au plus près de la caméra.

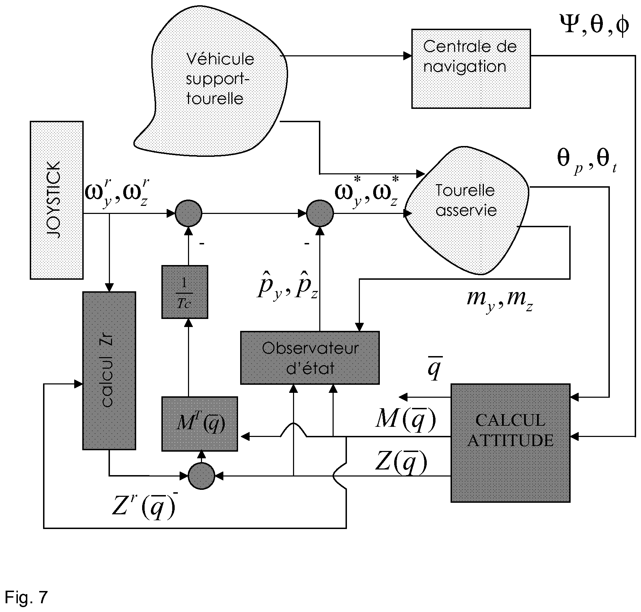

L'estimation des biais des gyromètres du positionneur est basée sur la méthode suivante schématisée Figure 7 :

Posons :

$m_y$ mesure gyromètre de la rotation $\omega_y$

$m_z$ mesure gyromètre de la rotation $\omega_z$

$p_y$ biais gyromètre y

$\hat{p}_z$ biais gyromètre z

$\hat{p}_y$ estimation du biais gyromètre y

$\hat{p}_z$ estimation du biais gyromètre z

Soit $q$ le quaternion d'attitude de la caméra par rapport au repère terrestre,
soit $q_1$ le quaternion d'attitude du véhicule par rapport au repère terrestre,
soit $q_2$ le quaternion d'attitude de la caméra par rapport au repère du véhicule, et $\bar{q}, \bar{q}_1\bar{q}_2$ les estimés de ces quaternions aux moyens des mesures de la centrale d'attitude et des codeurs.

Le calcul du quaternion d'attitude q du support de la caméra se fait par le produit du quaternion de l'attitude du véhicule par rapport au repère terrestre par le quaternion de l'attitude du support caméra par rapport au véhicule.

En posant :

$$q_1 = \begin{pmatrix} a_1 \\ b_1 \\ c_1 \\ d_1 \end{pmatrix} \qquad q_2 = \begin{pmatrix} a_2 \\ b_2 \\ c_2 \\ d_2 \end{pmatrix}$$

On montre que l'on peut exprimer $q_1$ au moyen des angles de lacet, tangage, roulis du véhicule (relation classique) :

$$a_1 = \cos\frac{\phi}{2}\cos\frac{\theta}{2}\cos\frac{\psi}{2} + \sin\frac{\phi}{2}\sin\frac{\theta}{2}\sin\frac{\psi}{2}$$

$$b_1 = \sin\frac{\phi}{2}\cos\frac{\theta}{2}\cos\frac{\psi}{2} - \cos\frac{\phi}{2}\sin\frac{\theta}{2}\sin\frac{\psi}{2}$$

$$c_1 = \cos\frac{\phi}{2}\sin\frac{\theta}{2}\cos\frac{\psi}{2} + \sin\frac{\phi}{2}\cos\frac{\theta}{2}\sin\frac{\psi}{2}$$

$$d_1 = \cos\frac{\phi}{2}\cos\frac{\theta}{2}\sin\frac{\psi}{2} - \sin\frac{\phi}{2}\sin\frac{\theta}{2}\cos\frac{\psi}{2} \tag{8}$$

Par ailleurs, on peut également exprimer $q_2$ au moyen de $\theta_P$ et $\theta_T$ suivant les relations :

$$a_2 = \cos\frac{\theta_T}{2}\cos\frac{\theta_P}{2} + \sin\frac{\theta_T}{2}\sin\frac{\theta_P}{2}$$

$$b_2 = \cos\frac{\theta_T}{2}\cos\frac{\theta_P}{2} - \sin\frac{\theta_T}{2}\sin\frac{\theta_P}{2}$$

$$c_2 = \sin\frac{\theta_T}{2}\cos\frac{\theta_P}{2} + \cos\frac{\theta_T}{2}\sin\frac{\theta_P}{2}$$

$$d_2 = \cos\frac{\theta_T}{2}\sin\frac{\theta_P}{2} - \sin\frac{\theta_T}{2}\cos\frac{\theta_P}{2} \tag{9}$$

Le quaternion d'attitude $q$ du support caméra par rapport au repère terrestre s'exprime: $q = q_1 \cdot q_2$ , c'est-à-dire: (produit de quaternion)

$$q = \begin{pmatrix} a \\ b \\ c \\ d \end{pmatrix} = \begin{pmatrix} a_2 & -b_2 & -c_2 & -d_2 \\ b_2 & a_2 & -d_2 & c_2 \\ c_2 & d_2 & a_2 & -b_2 \\ d_2 & -c_2 & b_2 & a_2 \end{pmatrix} \cdot \begin{pmatrix} a_1 \\ b_1 \\ c_1 \\ d_1 \end{pmatrix} \tag{10}$$

De même, à partir des mesures $\overline{q}_1\overline{q}_2$ , on déduit, $\overline{q}$ puisque l'on a :

$$\overline{q} = \overline{q}_1 \cdot \overline{q}_2 \quad (11)$$

Au niveau de la plateforme supportant la caméra, l'équation classique de propagation des quaternions s'écrit:

$$\begin{pmatrix} \dot{a} \\ \dot{b} \\ \dot{c} \\ \dot{d} \end{pmatrix} = 0.5 \begin{pmatrix} a & -b & -c & -d \\ b & a & -d & c \\ c & d & a & -b \\ d & -c & b & a \end{pmatrix} \cdot \begin{pmatrix} 0 \\ \omega_x \\ \omega_y \\ \omega_z \end{pmatrix} \quad (12)$$

On dispose de plus des mesures des gyromètres sur les axes Y, Z, (éventuellement X) dans le repère de la caméra. Ces mesures s'écrivent par définition :

$$\begin{pmatrix} m_y \\ m_z \end{pmatrix} = \begin{pmatrix} \omega_y + p_y \\ \omega_z + p_z \end{pmatrix} \quad (13)$$

Le but de la gyrostabilisation est de maintenir constants $\theta_{el}$ $\theta_{az}$ à une valeur de consigne : $\theta_{el}{}^* \theta_{az}{}^*$.

Maintenir constant $\theta_{el}$ $\theta_{az}$ revient à maintenir constant le vecteur de pointage de la caméra que l'on nomme $Z$ , exprimé dans le repère terrestre.

On remarque que ce vecteur $Z$ est normalisé à l'unité puisqu'il s'écrit :

$$Z = \begin{pmatrix} \cos(\theta_{el}) \cdot \cos(\theta_{az}) \\ \cos(\theta_{el}) \cdot \sin(\theta_{az}) \\ -\sin(\theta_{el}) \end{pmatrix} \quad (14)$$

Ce vecteur de pointage peut également s'écrire en fonction des composantes du quaternion $q$ . En utilisant la relation (4) on montre que l'on obtient

$$Z = \begin{pmatrix} a^2 + b^2 + c^2 + d^2 \\ 2(bc + ad) \\ 2(bd - ac) \end{pmatrix} = \begin{pmatrix} Z_1 \\ Z_2 \\ Z_3 \end{pmatrix} \quad (15)$$

Par dérivation de l'expression (15) combinée à la relation (12), on trouve tous calculs faits :

$$\begin{pmatrix} \dot{Z}_1 \\ \dot{Z}_2 \\ \dot{Z}_3 \end{pmatrix} = \begin{pmatrix} -2(bd + ac) & 2(bc - ad) \\ -2(cd - ab) & (a^2 - b^2 + c^2 - d^2) \\ -(a^2 - b^2 - c^2 + d^2) & 2(cd + ab) \end{pmatrix} \cdot \begin{pmatrix} \omega_y \\ \omega_z \end{pmatrix} \quad (16)$$

Posons :

$$M(q) = \begin{pmatrix} -2(bd+ac) & 2(bc-ad) \\ -2(cd-ab) & (a^2-b^2+c^2-d^2) \\ -(a^2-b^2-c^2+d^2) & 2(cd+ab) \end{pmatrix} \quad (17)$$

On remarque que la pseudo inverse $M^+(q)$ de $M(q)$ est égale à la transposée de cette matrice $M(q)$. C'est-à-dire :

$$M^+(q) = M^T(q) \quad (18)$$

$$M^T(q) \cdot M(q) = I_{2,2} \quad (19)$$

On dispose d'une estimation de $q$ que l'on a notée $\bar{q}$ qui est issue des mesures effectuées par la centrale d'attitude et les codeurs. Compte tenu de l'éloignement de la centrale, cette estimation est entachée d'erreurs. En revanche, il n'y a pas à proprement parler de dérive sur cette mesure. C'est pourquoi on peut la combiner avec les mesures des gyromètres de façon à estimer les biais de ces derniers.

L'estimation des biais $p_y, p_z$ des gyromètres peut se faire au moyen d'un observateur d'état.

Pour cela on définit un modèle prédicteur constant pour chacun de ces deux biais, soit :

$$\dot{p}_y = 0$$

$$\dot{p}_z = 0 \quad (20)$$

On synthétise ensuite un modèle augmenté du système afin de construire un observateur d'état. Soit $X$ le vecteur d'état de système augmenté :

$$X = \begin{pmatrix} Z_1 \\ Z_2 \\ Z_3 \\ p_y \\ p_z \end{pmatrix} \quad (21)$$

L'équation d'état du système augmenté s'écrit alors :

$$\dot{X} = \begin{bmatrix} 0_{3,3} & M(q) \\ 0_{2,3} & 0_{2,2} \end{bmatrix} \cdot X + \begin{pmatrix} M(q) \\ 0_{2,2} \end{pmatrix} \cdot \begin{pmatrix} \omega_y \\ \omega_z \end{pmatrix} \quad (23)$$

Ce modèle peut être considéré comme étant de type linéaire instationnaire puisque $M$ dépend de $q$ qui dépend lui-même du temps.

On synthétise l'observateur en remplaçant $q$ par $\overline{q}$, et en faisant l'hypothèse que les asservissements de vitesse à partir des gyromètres sont infiniment raides, c'est-à-dire $\omega_y^* = \omega_y$ et $\omega_z^* = \omega_z$ . Cette hypothèse de raideur infinie des asservissements de vitesse est tout à fait justifiée, attendu que la dynamique de l'observateur est beaucoup plus lente que celle des boucles des gyromètres.

Soit $\hat{X}$ le vecteur d'état estimé de $X$, on écrit alors l'équation d'état suivante de l'observateur :

$$\dot{\hat{X}} = \begin{bmatrix} 0_{3,3} & M(\overline{q}) \\ 0_{2,3} & 0_{2,2} \end{bmatrix} \cdot \hat{X} + \begin{pmatrix} M(\overline{q}) \\ 0_{2,2} \end{pmatrix} \cdot \begin{pmatrix} \omega_y^* \\ \omega_z^* \end{pmatrix} \quad (24)$$

L'équation d'observation étant :

$$\overline{Z} = \begin{bmatrix} I_{3,3} & 0_{3,2} \end{bmatrix} \cdot \hat{X} \quad (25)$$

Plusieurs observateurs peuvent être utilisés pour ce modèle. On peut en particulier faire appel à un filtre de Kalman instationnaire, qui est une possibilité parmi d'autres dont, par exemple un observateur s'appuyant sur les dérivées numériques des signaux.

En écrivant :

$$A(t) = \begin{bmatrix} 0_{3,3} & M(\overline{q}(t)) \\ 0_{2,3} & 0_{2,2} \end{bmatrix} \qquad B(t) = \begin{pmatrix} M(\overline{q}(t)) \\ 0_{2,2} \end{pmatrix} \qquad C = \begin{bmatrix} I_{3,3} & 0_{3,2} \end{bmatrix} \quad (26)$$

Les équations classiques du filtre de Kalman s'écrivent

$$\dot{\hat{X}} = A(t) \cdot \hat{X} + B(t) \cdot \begin{pmatrix} \omega_y^* \\ \omega_z^* \end{pmatrix} + Ko(t) \cdot \left( \overline{Z} - C \cdot \hat{X} \right)$$

$$Ko(t) = Po(t) \cdot C^T \cdot R_0^{-1}$$

$$\dot{P}_o = A(t) \cdot Po + Po \cdot A^T + Q_o - P_o \cdot C^T \cdot R_0^{-1} \cdot C \cdot P_0 \quad (27)$$

Avec

$Q_0$, $R_0$ matrices de covariances des bruits d'état et de sortie
$P_0$ matrice de covariance des erreurs d'estimation.
$Ko(t)$ gain du filtre de Kalman.

Il est à noter que les matrices $Q_0$, $R_0$ qui constituent les paramètres de réglage du filtre n'ont pas leurs coefficients choisis en fonction de considération statistiques.

Pour le réglage du filtre de Kalman, on s'intéresse à la dynamique d'estimation valeurs des biais. Il y a intérêt que cette dynamique soit lente devant celle des mouvements porteurs.

Une fois les biais estimés, on les introduit dans la loi de commande qui s'écrit alors :

$$\begin{pmatrix} \omega_y^* \\ \omega_z^* \end{pmatrix} = \begin{pmatrix} \omega_y^r - \hat{p}_y \\ \omega_z^r - \hat{p}_z \end{pmatrix} \quad (28)$$

Où $\omega_y^r$ $\omega_z^r$ sont des consignes externes issues par exemple d'un joystick manoeuvré par l'utilisateur de la caméra.

Une représentation schématique de l'estimation précédente des biais est donnée sur la Figure 7.

La loi de commande (28) compense donc les perturbations dues aux biais gyrométriques, c'est-à-dire qu'elle fait tendre asymptotiquement $\omega_y$ vers $\omega_y^r$ et $\omega_z$ vers $\omega_z$ mais elle ne stabilise pas Z.

Aussi est-il préférable d'opérer en outre une stabilisation par rétroaction (« feedback »), c'est-à-dire par retour d'état.

La loi de stabilisation par rétroaction doit, par exemple, aboutir à ce que l'on ait :

$$\begin{pmatrix} \dot{Z}_1 \\ \dot{Z}_2 \\ \dot{Z}_3 \end{pmatrix} = \frac{-1}{Tc} \cdot \begin{pmatrix} Z_1 - Z_1^r \\ Z_{21} - Z_2^r \\ Z_2 - Z_3^r \end{pmatrix} \quad (29)$$

où :

$Tc$ est un paramètre de réglage dont l'unité est la seconde, et $\begin{pmatrix} Z_1^r \\ Z_2^r \\ Z_3^r \end{pmatrix}$ est une consigne externe du vecteur normalisé de pointage.

Compte tenu des équations (16), (17), (18) et (28), la loi de commande s'écrit alors :

$$\begin{pmatrix} \omega_y^* \\ \omega_z^* \end{pmatrix} = \begin{pmatrix} -\hat{p}_y \\ -\hat{p}_z \end{pmatrix} - \frac{1}{Tc} \cdot M^T(\overline{q}) \cdot \begin{pmatrix} Z_1 - Z_1^r \\ Z_{21} - Z_2^r \\ Z_2 - Z_3^r \end{pmatrix} \quad (30)$$

Dans la pratique, la tourelle est manoeuvrée par l'utilisateur au moyen d'un Joystick, qui donne des consignes en vitesse.

En conséquence, il faut exprimer $\begin{pmatrix} Z_1^r \\ Z_2^r \\ Z_3^r \end{pmatrix}$ en fonction de $\omega_y^r$ $\omega_z^r$ ce qui se fait en considérant les équations (16), (17), (18), soit :

$$\begin{pmatrix} \dot{Z}_1^r \\ \dot{Z}_2^r \\ \dot{Z}_3^r \end{pmatrix} = M\,(\overline{q})\cdot\begin{pmatrix} \omega_y^r \\ \omega_z^r \end{pmatrix} \tag{31}$$

Par ailleurs, Tc qui à la dimension d'un temps a vocation à être très grand devant la constante de temps principale des boucles d'asservissement de vitesse angulaire incluant les gyromètres, précisément de façon à ne pas interférer avec cette boucle.

Il est alors nécessaire de rajouter une action directe ou anticipation (« feedforward ») à cette loi de commande qui s'écrit finalement :

$$\begin{pmatrix} \omega_y^* \\ \omega_z^* \end{pmatrix} = \begin{pmatrix} -\hat{p}_y \\ -\hat{p}_z \end{pmatrix} - \frac{1}{Tc}\cdot M^T(\overline{q})\cdot\begin{pmatrix} Z_1 - Z_1^r \\ Z_2 - Z_2^r \\ Z_2 - Z_3^r \end{pmatrix} + \begin{pmatrix} \omega_y^r \\ \omega_z^r \end{pmatrix} \tag{32}$$

La loi de commande ainsi synthétisée et qui est représentée Figure 7, permet ainsi d'estimer les biais des gyromètres afin de les compenser au niveau des boucles de vitesses angulaires où sont précisément inclus ces gyromètres. L'ensemble anticipation-rétroaction (« feedforward-feedback ») permet d'assurer un suivi de consigne du vecteur de pointage donné par l'utilisateur.

Cette loi stabilisante possède une dynamique beaucoup plus lente que les boucles de vitesse des gyromètres. L'utilisation du terme de rétroaction (« feedback ») est optionnel si l'on tolère que sur du long terme le vecteur de pointage dérive quelque peu.

Ainsi, cette loi de commande s'appuie sur une estimation q de l'attitude de la caméra qui provient des mesures combinées de la centrale d'attitude du véhicule, et des codeurs. Cette attitude estimée est entachée d'erreurs, ce qui n'est pas gênant à condition qu'il n'y ait pas de dérive dans l'erreur sur l'attitude mesurée par la centrale d'attitude du véhicule, ce qui est le cas en pratique étant donné les performances élevées de ce type de centrale d'attitude en particulier dans le cas où le véhicule en possède une en pré-équipement.

Cette loi de commande permet ainsi d'obtenir sur une tourelle des performances en gyrostabilisation très bonnes, on parvient à réduire les dérives résiduelles dues aux biais d'un facteur 20 voire 50, cela avec un minimum de capteurs et de très bas coûts.

La loi de commande décrite précédemment permet de stabiliser la ligne de visée de la caméra. En revanche, puisque la tourelle ne comporte que deux axes, il n'est pas possible de stabiliser mécaniquement le roulis de ladite caméra.

L'utilisation conjointe de la mesure de vitesse instantanée de la caméra suivant son axe X combinée aux informations de la centrale de navigation du véhicule et des codeurs de la tourelle permet d'estimer cet angle de roulis.

Une fois estimé, cette information sur l'angle de roulis permet d'opérer un traitement de l'image perçue par la caméra de façon à lui faire subir une rotation opposée à celle de l'angle de roulis estimé.

Soit :

$m_x$ La mesure de la rotation $\omega_x$

$p_x$ Le biais du gyromètre suivant l'axe x.

On a:

$$m_x = p_x + \omega_x$$

Le roulis $\overline{\phi}_c$ est directement déduit des informations des codeurs et de la centrale du véhicule à partir du

quaternion $\overline{q}$ selon la relation classique :

$$\overline{\phi}_c = \arctan\left( \frac{2\left(\overline{c}\,\overline{d} + \overline{a}\,\overline{b}\right)}{\left(\overline{a}^2 - \overline{b}^2 - \overline{c}^2 + \overline{d}^2\right)} \right) \tag{33}$$

$\overline{a}, \overline{b}, \overline{c}, \overline{d}$ étant les composantes de $\overline{q}$ .

Par ailleurs, $\omega_x$ est directement la dérivée du roulis $\phi_c$ .

En attribuant un modèle prédicteur constant au biais $p_x$ , on peut bâtir un modèle de synthèse sur lequel sera basé un observateur d'état destiné à estimer le roulis.

Ledit modèle de synthèse a la forme suivante :

$$\dot{p}_x = 0$$

$$\dot{\phi}_c = m_x - p_x \tag{34}$$

L'observateur d'état du roulis s'écrit :

$$\dot{\hat{p}}_x = K_1 \cdot \left( \overline{\phi}_c - \hat{\phi}_c \right)$$

$$\dot{\hat{\phi}}_c = m_x - p_x + K_2 \cdot \left( \overline{\phi}_c - \hat{\phi}_c \right) \tag{35}$$

Les variables surmontées d'un chapeau (^) étant les estimées, et $K_1$, $K_2$ étant les gains de l'observateur qui peuvent être réglés par exemple par placement de pôles ou encore par une optimisation de type « Kalman ».

Le roulis étant estimé, il est alors possible de transmettre cette valeur à un dispositif de traitement d'image associé à la caméra dans le but de faire subir à cette image une rotation d'angle $-\hat{\phi}_c$ .

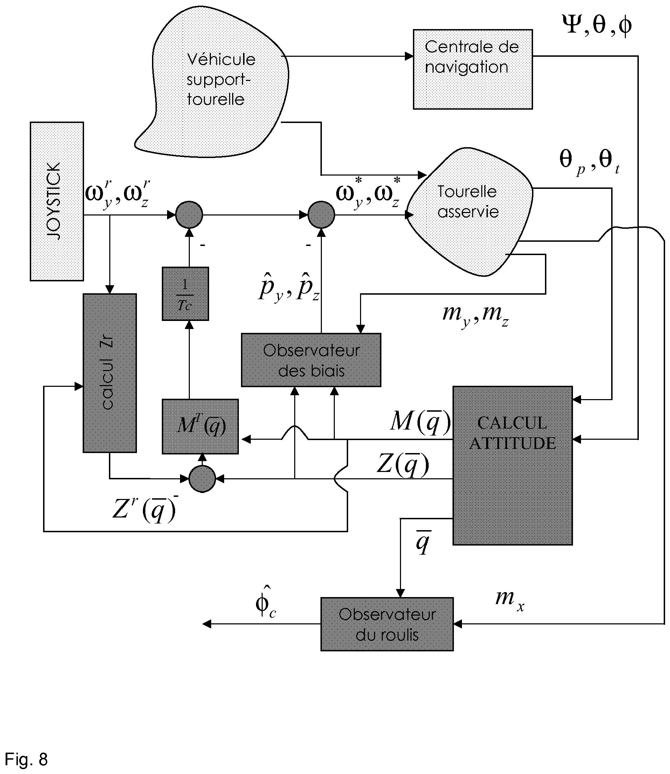

La Figure 8 donne une représentation de la structure de la loi de commande dans son environnement d'application dans le cas où le roulis doit être également corrigé.

Cette correction de roulis utilise la faculté de rotation des images de la caméra et est donc logicielle mais la correction de roulis peut aussi être matérielle dans le cas où un axe supplémentaire motorisé commandé est mis en oeuvre pour faire tourner l'équipement. Dans ce cas, dans les moyens d'asservissement-correction intra-positionneur, il y a en plus une boucle intra-positionneur asservissant la vitesse de rotation $\omega_x$ , au moyen de la mesure $m_x$. La consigne concernant le roulis pour la loi de commande est alors

$$\omega_x^* = \frac{1}{Tcx} \cdot \left( \phi_c^* - \overline{\phi}_c \right) - \hat{p}_x$$

où $Tcx$ est un paramètre de réglage dont l'unité de grandeur est celle d'un temps.

D'une manière générale, le système de l'invention peut être considéré comme permettant la mise en oeuvre d'une loi de commande non linéaire par retour d'état reconstruit qui est une loi de commande externe englobant une loi de commande intra-positionneur, cette dernière étant la loi de commande interne.

Un des intérêts du système de l'invention est que la loi de commande intra-positionneur peut préexister à la loi de commande externe et cela permet, dans des applications particulières, d'utiliser des positionneurs fabriqués antérieurement et dépourvus de système de compensation de biais en y ajoutant des moyens permettant la mise en oeuvre de la loi externe de l'invention sans qu'il n'y résulte aucun inconvénient. D'un point de vue économique cette modularité des lois de commande est très appréciable, puisqu'elle permet de doter des positionneurs gyrostabilisés anciens d'un système de compensation de dérive, sans remettre en cause la structure existante.

On peut noter que cette caractéristique différentie la présente invention du procédé présenté dans le document GB2345155A déjà cité et dans lequel la boucle interne, qui, de plus, est une boucle de position, est inévitablement imbriquée avec le filtre de Kalman, puisque l'on ne peut substituer une mesure directe des codeurs aux estimés angulaires corrigé du cardan. Au contraire dans la présente invention, une étape de calcul d'attitude du positionneur est mise en oeuvre à partir des mesures brutes de la centrale gyroscopique du véhicule et des mesures angulaires du positionneur. Le résultat de ce calcul provenant de mesures brutes et donc entaché de certaines erreurs, est ensuite utilisé par l'observateur d'état. En effet, on rappelle que dans la présente invention, l'estimée de l'attitude du positionneur est fusionnée avec les mesures gyrométriques au moyen d'un observateur d'état qui peut être un filtre de Kalman, afin d'estimer le biais des gyromètres. L'estimation d'attitude d'équipement $\bar{q}$ est obtenue par calcul dans les moyens de calcul du système directement à partir des mesures d'attitude du véhicule ($\psi$, $\theta$, $\Phi$) et des mesures angulaires ($\theta_p$, $\theta_t$) des axes de positionnement commandés du positionneur.

Aucune étape de calcul de l'attitude des miroirs n'est effectuée dans le procédé de GB2345155A, les mesures et données corrigées et intégrées des capteurs sont directement traitées par le filtre de Kalman. On peut également noter à ce sujet que pour un axe ayant une fonction de transfert donnée, une boucle de vitesse comme mise en oeuvre dans la présente invention, peut toujours être plus performante qu'une boucle de position pour ce qui concerne la bande passante et la dynamique de rejet de perturbations.

Ainsi, le système de l'invention peut être envisagé comme permettant la mise en oeuvre d'une loi de commande additive d'un positionneur asservi avec des gyromètres, visant à augmenter les performances en stabilisation desdits positionneurs. Et permet de résoudre la question de la mise à jour de systèmes anciens, sans qu'il en résulte le moindre inconvénient pour le système existant.

Bien entendu la présente invention n'est pas limitée aux modes de réalisation particuliers qui viennent d'être décrits, en particulier des variantes existent dans l'expression mathématique du problème et de la façon d'y apporter une solution et elle s'étend donc à toutes variantes et équivalents conformes à son esprit. Ainsi, on comprend bien que l'invention peut être déclinée selon de nombreuses autres possibilités sans pour autant sortir du cadre défini par la description et les revendications.

**Revendications**

1. Système de stabilisation d'un positionneur d'équipement à axes motorisés, le positionneur s'orientant sous l'action d'une consigne d'orientation selon une ligne de visée/pointage, ledit positionneur étant installé sur un véhicule, le véhicule subissant des mouvements dits mouvements porteurs, le positionneur comportant des codeurs angulaires produisant des mesures angulaires ($\theta_p$, $\theta_t$) pour ses axes commandés et un ensemble de capteurs gyrométriques produisant des mesures de vitesses de rotation instantanée d'équipement ($m_y$, $m_z$), lesdits capteurs gyrométriques présentant des biais ($p_y$, $p_z$), le positionneur comportant des capteurs gyrométriques pour au moins deux axes (y) (z) du repère de l'équipement, le positionneur comportant une unité de calcul avec des moyens d'asservissement-correction intra-positionneur des vitesses de rotation instantanées de l'équipement utilisant des mesures et la consigne d'orientation pour stabiliser l'équipement selon la ligne de visée,
le système étant destiné à être installé dans le véhicule qui comporte un moyen de mesure de l'attitude du véhicule donnant des mesures d'attitude du véhicule,
**caractérisé en ce que** le système comporte des moyens de calcul configurés pour commander le positionneur selon une loi de commande permettant de corriger les biais ($\hat{p}_y$, $\hat{p}_z$) grâce à des informations d'attitude du véhicule et en mettant en oeuvre un observateur d'état combinant une estimation d'attitude d'équipement ($\bar{q}$) et les mesures de vitesses de rotation d'équipement ($m_y$, $m_z$) afin de déterminer les biais des capteurs gyrométriques du positionneur et de les corriger au sein de la loi de commande, l'estimation d'attitude d'équipement ($\bar{q}$) étant obtenue par calcul dans les moyens de calcul du système directement à partir des mesures d'attitude du véhicule ($\Psi$, $\theta$, $\Phi$) et des mesures angulaires ($\theta_p$, $\theta_t$) des axes de positionnement commandés du positionneur.

2. Système selon la revendication 1, **caractérisé en ce que** la consigne d'orientation est une consigne de vitesse de rotation instantanée, et les moyens d'asservissement-correction intra-positionneur de l'unité de calcul sont basés sur un correcteur de vitesse de rotation instantanée ($C_t$, $C_p$) sur chacun desdits au moins deux axes (y) et (z) dans le repère de l'équipement s'appliquant à la matrice Jacobienne inversée ($J^{-1}$) du positionneur et avec rétroaction de mesures de vitesses de rotation d'équipement ($m_y$, $m_z$), ladite matrice Jacobienne dépendant de mesures angulaires ($\theta_p$, $\theta_t$) des codeurs du positionneur.

3. Système selon la revendication 2, **caractérisé en ce que** les correcteurs *Cp* et *Ct* de vitesse de rotation instantanée des moyens d'asservissement-correction intra-positionneur selon les axes (y) (z) du système à positionner sont synthétisés par une technique de calcul d'asservissement, classique ou avancée.

**4.** Système selon l'une des revendications 1, 2 ou 3, **caractérisé en ce qu'**il comporte en outre dans ses moyens de calcul un correcteur de dérive de pointage dont la constante de temps est grande par rapport à la constante de temps des boucles de calcul des moyens d'asservissement-correction intra-positionneur.

**5.** Système selon la revendication 4, **caractérisé en ce que** la consigne d'orientation est exprimée au moyen d'une consigne de vitesse de rotation instantanée, et le correcteur de dérive de pointage met en oeuvre une structure de calcul en rétroaction (« feedback ») et en anticipation (« feedforward ») à partir de l'attitude d'équipement ($\bar{q}$) estimée et agissant sur la consigne de vitesse de rotation instantanée destinée à l'asservissement-correction intra-positionneur.

**6.** Système selon l'une quelconque des revendications 2 à 5, **caractérisé en ce qu'**il est configuré pour un positionneur qui est une tourelle ne comportant que deux moyens d'orientation d'axe commandés, un premier de type pan/horizontal et un second de type tilt/vertical et deux capteurs gyrométriques mesurant les vitesses de rotation instantanée suivant les axes y et z de l'équipement à stabiliser, la consigne de vitesse de rotation pour l'asservissement-correction intra-positionneur étant selon lesdits deux axes.

**7.** Système selon les revendications 5 et 6, **caractérisé en ce que** la consigne en vitesse $\omega_y^* \; \omega_z^*$ compensant les biais et donc la dérive de pointage et destinée aux moyens d'asservissement-correction intra-positionneur est calculée à partir de la consigne de vitesse de rotation instantanée $\omega_y^r \; \omega_z^r$ provenant d'un utilisateur et des estimées des biais $\hat{p}_y$, $\hat{p}_z$ par application d'une loi de commande correspondant à :

$$\begin{pmatrix} \omega_y^* \\ \omega_z^* \end{pmatrix} = \begin{pmatrix} -\hat{p}_y \\ -\hat{p}_z \end{pmatrix} - \frac{1}{Tc} \cdot M^T(\overline{q}) \cdot \begin{pmatrix} Z_1 - Z_1^r \\ Z_2 - Z_2^r \\ Z_2 - Z_3^r \end{pmatrix} + \begin{pmatrix} \omega_y^r \\ \omega_z^r \end{pmatrix}$$

où

$Z_i^r$ i=1, 2, 3 sont les coordonnées de la consigne du vecteur de pointage dans le repère terrestre,
$Z_1$, $Z_2$, $Z_3$ sont les coordonnées du vecteur de pointage dans le repère terrestre,
$M^T$ est une matrice (2*3) dont les éléments sont exprimés à partir des composantes du quaternion d'attitude $\bar{q}$ estimé de l'attitude de l'équipement
Tc est un paramètre de réglage, réel, supérieur à 0.

**8.** Système selon l'une quelconque des revendications précédentes, **caractérisé en ce qu'**il est configuré pour un équipement qui est un appareil de prise de vues.

**9.** Système selon la revendication 8, **caractérisé en ce qu'**il est configuré pour un positionneur comportant en outre un capteur gyrométrique supplémentaire pour l'axe de roulis produisant des mesures de vitesse de rotation d'équipement en roulis ($m_x$), les trois capteurs gyrométriques étant disposés selon un trièdre, et **en ce que** l'équipement est un appareil de prise de vues électronique comportant des moyens de traitement d'image dont au moins de traitement en rotation d'image et **en ce que** les moyens de calcul du système permettent en outre de corriger et commander la rotation de l'image afin de supprimer l'effet du roulis du véhicule à partir des mesures de vitesse de rotation d'équipement en roulis ($m_x$) et de l'estimation d'attitude d'équipement ($\bar{q}$).

**10.** Système selon l'une quelconque des revendications 1 à 8, **caractérisé en ce qu'**il est configuré pour un positionneur comportant trois moyens d'orientation d'axe commandé, un premier de type pan/horizontal, un deuxième de type tilt/vertical et un troisième en roulis (x), ledit moyen d'orientation en roulis comportant un codeur angulaire produisant des mesures angulaires ($\theta_r$) pour ledit axe commandé, le positionneur comportant trois capteurs gyrométriques pour lesdits trois axes et produisant des mesures de vitesses de rotation d'équipement ($m_y$, $m_z$, $m_x$), les trois capteurs gyrométriques étant disposés selon un trièdre, et **en ce que** la consigne d'orientation est selon lesdits trois axes.

**11.** Procédé de stabilisation d'un positionneur d'équipement à axes motorisés, le positionneur s'orientant sous l'action d'une consigne d'orientation selon une ligne de visée/pointage, ledit positionneur étant installé sur un véhicule, le véhicule subissant des mouvements dits mouvements porteurs, le positionneur d'équipement comportant des codeurs angulaires produisant des mesures angulaires ($\theta_p$ , $\theta_t$) pour ses axes commandés et un ensemble de capteurs gyrométriques produisant des mesures de vitesses de rotation instantanée d'équipement ($m_y$, $m_z$), lesdits capteurs gyrométriques présentant des biais ($p_y$ , $p_z$ ), le positionneur comportant des capteurs gyrométriques pour au moins deux axes (y) (z) du repère de l'équipement, le positionneur comportant une unité de calcul avec des moyens d'asservissement-correction intra-positionneur des vitesses de rotation instantanées de l'équipement utilisant des mesures et la consigne d'orientation pour stabiliser l'équipement selon la ligne de visée,
un moyen de mesure de l'attitude du véhicule donnant des mesures d'attitude du véhicule étant installé dans le véhicule,
**caractérisé en ce qu'**on met en oeuvre des moyens de calcul pour commander le positionneur selon une loi de commande permettant de corriger les biais ($\hat{p}_y$, $\hat{p}_z$) grâce à des informations d'attitude du véhicule et **en ce qu'**on y met en oeuvre un observateur d'état combinant une estimation d'attitude d'équipement ($\bar{q}$) et les mesures de vitesses de rotation d'équipement ($m_y$, $m_z$) afin de déterminer les biais des capteurs gyrométriques du positionneur et de les corriger au sein de la loi de commande, et **en ce que** l'estimation d'attitude d'équipement ($\bar{q}$) est obtenue par calcul dans les moyens de calcul directement à partir des mesures d'attitude du véhicule ($\Psi, \theta, \Phi$) et des mesures angulaires ($\theta_p$ , $\theta_t$ ) des axes de positionnement commandés du positionneur.

**12.** Procédé selon la revendication 11, caractérisé en qu'on utilise un véhicule qui est pré-équipé avec un positionneur d'équipement à axes motorisés.

**13.** Procédé selon la revendication 11,**caractérisé en ce qu'**on équipe un véhicule non équipé d'un positionneur d'équipement à axes motorisés, d'un moyen de mesure de l'attitude du véhicule et de moyens de calcul.


**Patentansprüche**

**1.** System zur Stabilisierung eines Positionierers mit motorisierten Achsen, wobei sich der Positionierer unter einer Ausrichtungsvorgabe gemäß einer Sicht-/Teillinie ausrichtet, wobei der Positionierer auf einem Fahrzeug installiert ist, wobei das Fahrzeug Bewegungen, sogenannten Trägerbewegungen, ausgesetzt ist, wobei der Positionierer Winkelkodierer, die Winkelmessungen ($\theta_p$, $\theta_t$) für dessen gesteuerte Achsen erzeugen, und eine Gesamtheit von gyrometrischen Sensoren, die Messungen der momentanen Drehgeschwindigkeit ($m_y$, $m_z$) eines Geräts liefern, aufweist, wobei die gyrometrischen Sensoren schräge Richtungen ($p_y$, $p_z$) aufweisen, wobei der Positionierer gyrometrische Sensoren für wenigstens zwei Achsen (y) (z) des Bezugspunkts des Geräts aufweist, wobei der Positionierer eine Recheneinheit mit Mitteln zur positioniererintemen Steuerung und Korrektur der momentanen Drehgeschwindigkeiten des Geräts, die die Ausrichtungsvorgabe zum Stabilisieren des Geräts gemäß der Sichtlinie verwenden, aufweist,
wobei das System dazu ausgelegt ist, in dem Fahrzeug installiert zu werden, das ein Mittel zum Messen des Verhaltens des Fahrzeugs aufweist, das Messungen des Verhaltens des Fahrzeugs liefert, **dadurch gekennzeichnet, daß** das System Rechenmittel aufweist, die dazu ausgelegt sind, den Positionierer gemäß einem Steuerungs gesetz
zu steuern, das ermöglicht, die schrägen Richtungen ($\hat{p}_y$ , $\hat{p}_z$) aufgrund der Informationen über das Verhalten des Fahrzeugs zu korrigieren, und das einen Zustandsüberwacher einsetzt, der eine Abschätzung des Verhaltens des Geräts (($\bar{q}$) mit Messungen der Drehgeschwindigkeit ($m_y$, $m_z$) kombiniert, um die schrägen Richtungen der gyrometrischen Sensoren des Positionierers zu bestimmen und diese im Rahmen des Steuerungsgesetzes zu korrigieren, wobei die Abschätzung des Verhaltens des Geräts($\bar{q}$) aus den Messungen des Verhaltens des Fahrzeugs ($\Psi$, $\theta$, $\Phi$) und den Winkelmessungen ($\theta_p$, $\theta_t$) durch direkte Berechnung in den Rechenmitteln des Systems erhalten wird.

**2.** System gemäß Anspruch 1, **dadurch gekennzeichnet, daß** die Ausrichtungsvorgabe ein Sollwert für die momentane Drehgeschwindigkeit ist, und daß die Mittel zur positioniererinternen Steuerung und Korrektur der Recheneinheit auf einem Korrekturglied für die momentane Drehgeschwindigkeit ($C_t$, $C_p$) an jeder der besagten wenigstens zwei Achsen (y) und (z) am Bezugspunkt des Geräts basieren, das auf die inverse Jacobimatrix ($J^{-1}$) des Positionierers und mit Rückwirkung von Messungen von Drehgeschwindigkeiten ($m_y$, $m_z$) des Geräts angewendet wird, wobei die Jacobimatrix von Winkelmessungen ($\theta_p$, $\theta_t$) des Kodierers des Positionierers abhängt.

3. System gemäß Anspruch 2, **dadurch gekennzeichnet, daß** die Korrekturglieder *Cp* und *Ct* der momentanen Drehgeschwindigkeit der Mittel zur positioniererinternen Steuerung und Korrektur gemäß den Achsen (y) (z) des zu positionierenden Systems durch eine klassische oder weiterentwickelte Rechentechnik der Ansteuerung synthetisiert werden.

4. System gemäß einem der Ansprüche 1, 2 oder 3, **dadurch gekennzeichnet, daß** es außerdem in seinen Rechenmitteln ein Korrekturglied für Peilabweichungen aufweist, dessen Zeitkonstante im Verhältnis zur Zeitkonstante der Rechenschleifen der Mittel zur positioniererinternen Steuerung und Korrektur groß ist.

5. System gemäß Anspruch 4, **dadurch gekennzeichnet, daß** die Ausrichtungsvorgabe mittels eines Sollwerts für die momentane Drehgeschwindigkeit ausgedrückt wird und das Korrekturglied für Peilabweichungen eine von dem abgeschätzten Verhalten des Geräts ($\bar{q}$) ausgehende und auf den für die positioniererinterne Steuerung und Korrektur bestimmten Sollwert für die momentane Drehgeschwindigkeit wirkende Struktur aus rückwärts gerichteten ("feedback") und vorwärts gerichteten ("feedforward") Berechnungen einsetzt.

6. System gemäß einem der Ansprüche 2 bis 5, **dadurch gekennzeichnet, daß** es für einen Positionierer ausgelegt ist, der ein Turm ist, der nur zwei Ausrichtungsmittel mit gesteuerten Achsen aufweist, ein erstes vom Typ horizontalen Typ und ein zweites vom vertikalen Typ, und zwei gyrometrische Sensoren, die die Geschwindigkeiten der momentanen Drehung um die y- und z-Achsen des zu stabilisierenden Geräts messen, wobei der Sollwert für die Drehgeschwindigkeit für die positioniererinterne Steuerung und Korrektur entsprechend der beiden Achsen ist.

7. System gemäß den Ansprüchen 5 und 6, **dadurch gekennzeichnet, daß**

der Geschwindigkeitssollwert $\omega_y^*$ $\omega_z^*$ , der die schrägen Richtungen und somit die Peilabweichungen kompensiert und für die Mittel zur positioniererinternen Steuerung und Korrektur bestimmt ist, vom von einem Nutzer kommenden Sollwert für die momentane Drehgeschwindigkeit $\omega_y^r$ $\omega_z^r$ und den Abschätzungen der schrägen Richtungen $\hat{p}_y$, $\hat{p}_z$ unter Anwendung des Steuerungsgesetzes, das

$$\begin{pmatrix} \omega_y^* \\ \omega_z^* \end{pmatrix} = \begin{pmatrix} -\hat{p}_y \\ -\hat{p}_z \end{pmatrix} - \frac{1}{Tc} \cdot M^T(\bar{q}) \cdot \begin{pmatrix} Z_1 - Z_1^r \\ Z_2 - Z_2^r \\ Z_2 - Z_3^r \end{pmatrix} + \begin{pmatrix} \omega_y^r \\ \omega_z^r \end{pmatrix}$$

entspricht, errechnet wird, wobei

$Z_i^r$ i =1, 2, 3 die Koordinaten des Sollwerts des Peilvektors im Bezugspunkt auf der Erde sind,
$Z_1$, $Z_2$, $Z_3$ die Koordinaten des Peilvektors im Bezugspunkt auf der Erde sind,
$M^T$ eine (2*3)-Matrix ist, deren Elemente von den Komponenten einer
abgeschätzten Verhaltensquatemion $\bar{q}$ des Verhaltens des Geräts ausgehend ausgedrückt werden,
Tc ein reeller Regelparameter ist, der größer als Null ist.

8. System gemäß einem der vorangehenden Ansprüche, **dadurch gekennzeichnet, daß** es für ein Gerät ausgelegt ist, das ein Bildaufnahmegerät ist.

9. System gemäß Anspruch 8, **dadurch gekennzeichnet, daß** es für einen Positionierer ausgelegt ist, der außerdem einen zusätzlichen gyrometrischen Sensor für die Rollachse aufweist, der Messungen der Rolldrehgeschwindigkeit ($m_x$) des Geräts liefert, wobei die drei gyrometrischen Sensoren gemäß einem Trieder angeordnet sind, und dadurch, daß das Gerät ein elektronisches Bildaufnahmegerät ist, das Bildverarbeitungsmittel, und zwar mindestens zur Verarbeitung durch Bilddrehung, aufweist, und daß die Rechenmittel des Systems außerdem ermöglichen, die Bilddrehung zu korrigieren und zu steuern, um die Auswirkung der Rollbewegung des Fahrzeugs von Messungen

der Rolldrehgeschwindigkeit ($m_x$) des Geräts und der Abschätzung des Verhaltens des Geräts ($\bar{q}$) ausgehend zu unterdrücken.

10. System gemäß einem der Ansprüche 1 bis 8, **dadurch gekennzeichnet, daß** es für einen Positionierer ausgelegt ist, der drei Ausrichtungsmittel mit gesteuerten Achsen aufweist, ein erstes vom Typ horizontalen Typ und ein zweites vom vertikalen Typ und ein drittes vom Rolltyp (x), wobei das Ausrichtmittel vom Rolltyp einen Winkelkodierer aufweist, der Winkelmessungen ($\theta_r$) für die gesteuerte Achse liefert, wobei der Positionierer drei gyrometrische Sensoren für die drei Achsen aufweist und Messungen der Drehgeschwindigkeiten ($m_y$, $m_z$, $m_x$) des Geräts liefert, wobei die drei gyrometrischen Sensoren gemäß einem Trieder angeordnet sind, und dadurch, daß der Sollwert der Ausrichtung gemäß den drei Achsen ist.

11. Stabilisationsverfahren für einen Positionierer eines Geräts mit motorisierten Achsen, wobei sich der Positionierer unter einer Ausrichtungsvorgabe gemäß einer Sicht-/Peillinie ausrichtet, wobei der Positionierer auf einem Fahrzeug installiert ist, wobei das Fahrzeug Bewegungen, sogenannten Trägerbewegungen, ausgesetzt ist, wobei der Gerätepositionierer Winkelkodierer, die Winkelmessungen ($\theta_p$, $\theta_t$) für dessen gesteuerte Achsen erzeugen, und eine Gesamtheit von gyrometrischen Sensoren, die Messungen der momentanen Drehgeschwindigkeit ($m_y$, $m_z$) eines Geräts liefern, aufweist, wobei die gyrometrischen Sensoren schräge Richtungen ($p_y$, $p_z$) aufweisen, wobei der Positionierer gyrometrische Sensoren für wenigstens zwei Achsen (y) (z) des Bezugspunkts des Geräts aufweist, wobei der Positionierer eine Recheneinheit mit Mitteln zur positioniererintemen Steuerung und Korrektur der momentanen Drehgeschwindigkeiten des Geräts, die die Ausrichtungsvorgabe zum Stabilisieren des Geräts gemäß der Sichtlinie verwenden, aufweist,
wobei in dem Fahrzeug ein Mittel zum Messen des Verhaltens des Fahrzeugs installiert ist, das Messungen des Verhaltens des Fahrzeugs liefert,
**dadurch gekennzeichnet, daß** Rechenmittel eingesetzt werden, die dazu ausgelegt sind, den Positionierer gemäß einem Steuerungsgesetz
zu steuern, das ermöglicht, die schrägen Richtungen($\hat{p}_y$, $\hat{p}_z$) aufgrund der Informationen über das Verhalten des Fahrzeugs zu korrigieren, und daß ein Zustandsüberwacher eingesetzt wird, der eine Abschätzung des Verhaltens des Geräts (($\bar{q}$) mit Messungen der Drehgeschwindigkeit ($m_y$, $m_z$) kombiniert, um die schrägen Richtungen der gyrometrischen Sensoren des Positionierers zu bestimmen und diese im Rahmen des Steuerungsgesetzes zu korrigieren, wobei die Abschätzung des Verhaltens des Geräts($\bar{q}$) aus den Messungen des Verhaltens des Fahrzeugs ($\psi$, $\theta$, $\Phi$) und den Winkelmessungen ($\theta_p$, $\theta_t$) der gesteuerten Positionierachsen des Positionierers erhalten wird.

12. Verfahren gemäß Anspruch 11, **dadurch gekennzeichnet, daß** ein Fahrzeug verwendet wird, das mit einem Gerätepositionierer mit gesteuerten Achsen ausgestattet ist.

13. Verfahren gemäß Anspruch 11, **dadurch gekennzeichnet, daß** ein nicht mit einem Gerätepositionierer mit motorisierten Achsen ausgestattetes Fahrzeug mit einem Mittel zum Messen des Verhaltens des Fahrzeugs und mit Rechenmitteln ausgestattet wird.

**Claims**

1. A stabilization system for an equipment positioner with motorized axes, the positioner being oriented under the action of a command of orientation following a line of sight/pointing, said positioner being installed on a vehicle, the vehicle undergoing movements referred to as bearing movements, the positioner including angle encoders producing angle measurements ($\theta_p$, $\theta_t$) for its controlled axes and a set of gyrometer sensors producing measurements of equipment instantaneous rates of rotation ($m_y$, $m_z$), said gyrometer sensors exhibiting biases ($p_y$, $p_z$), the positioner including gyrometer sensors for at least two axes (y) (z) of the equipment reference system, the positioner including a calculation unit with intra-positioner means for servo control-correction of the instantaneous rates of rotation of the equipment using measurements and the command of orientation for stabilizing the equipment following the line of sight,
the system being intended to be installed in the vehicle that includes a means for measuring the vehicle attitude, giving measurements of attitude of the vehicle,
**characterized in that** the system includes calculation means for controlling the positioner according to a control law that allows correcting the bias ($\hat{p}_y$, $\hat{p}_z$) thanks to vehicle attitude information and by implementing a state observer combining an equipment attitude estimation ($\bar{q}$) and the measurements of equipment rates of rotation ($m_y$, $m_z$) so as to determine the biases of the gyrometer sensors of the positioner and to correct them within the control law, the equipment attitude estimation $(\overline{q})$ being obtained, in the calculation means of the system, by calculation directly based on the vehicle attitude measurements $(\Psi, \theta, \Phi)$ and the angle measurements $(\theta_p, \theta_t)$ of the controlled positioning axes of the positioner.

2. The system according to claim 1, **characterized in that** the command of orientation is a command of instantaneous rate of rotation, and the intra-positioner servo control-correction means of the calculation unit are based on a corrector of instantaneous rate of rotation (Ct, Cp) on each of said at least two axes (y) and (z) in the equipment reference system, which is applied to the inverse Jacobian matrix $(J^{-1})$ of the positioner and with feedback of measurements of equipment rates of rotation $(m_y, m_z)$, said Jacobian matrix depending on angle measurements $(\theta_p, \theta_t)$ of the encoders of the positioner.

3. The system according to claim 2, **characterized in that** the correctors *Cp* and *Ct* of instantaneous rate of rotation of the intra-positioner servo control-correction means following the axes (y) (z) of the system to be positioned are synthesized by a technique of servo control calculation, which may be conventional or sophisticated.

4. The system according to one of claims 1, 2 or 3, **characterized in that** it further includes, in its calculation means, a pointing drift corrector, the time constant of which is high with respect to the time constant of the calculation loops of the intra-positioner servo control-correction means.

5. The system according to claim 4, **characterized in that** the command of orientation is expressed by means of a command of instantaneous rate of rotation, and the pointing drift corrector implements a feedback and feedforward calculation structure based on the estimated equipment structure $(\overline{q})$ and acting on the command of instantaneous rate of rotation intended to the intra-positioner servo control-correction.

6. The system according to any one of claims 2 to 5, **characterized in that** it is configured for a positioner that is a turret comprising only two controlled axis-orientation means, a first one of the pan/horizontal type and a second one of the tilt/vertical type, and two gyrometer sensors measuring the instantaneous rates of rotation about the axes y and z of the equipment to be stabilized, the command of rate of rotation for the intra-positioner servo control-correction being around said two axes.

7. The system according to claims 5 and 6, **characterized in that** the rate command $\omega_y^* \ \omega_z^*$ compensating for the biases and thus for the pointing drift and intended to the intra-positioner servo control-correction means is calculated based on the command of instantaneous rate of rotation $\omega_y^r \ \omega_z^r$ coming from a user and on the bias estimates $\hat{p}_y$, $\hat{p}_z$ by application of a control law corresponding to:

$$\begin{pmatrix} \omega_y^* \\ \omega_z^* \end{pmatrix} = \begin{pmatrix} -\hat{p}_y \\ -\hat{p}_z \end{pmatrix} - \frac{1}{Tc} \cdot M^T(\overline{q}) \cdot \begin{pmatrix} Z_1 - Z_1^r \\ Z_2 - Z_2^r \\ Z_2 - Z_3^r \end{pmatrix} + \begin{pmatrix} \omega_y^r \\ \omega_z^r \end{pmatrix}$$

where

$Z_i^r$ i=1, 2, 3 are the coordinates of the pointing vector command in the terrestrial reference system,
$Z_1$, $Z_2$, $Z_3$ are the coordinates of the pointing vector in the terrestrial reference system,
$M^T$ is a matrix (2*3) whose elements are expressed based on the components of the estimated attitude quaternion $\overline{q}$ of the attitude of the equipment,
Tc is an adjustment parameter, real, higher than 0.

8. The system according to any one of the preceding claims, **characterized in that** it is configured for an equipment that is an imaging apparatus.

9. The system according to claim 8, **characterized in that** it is configured for a positioner further including an additional gyrometer sensor for the roll axis, producing measurements of equipment rate of roll rotation ($m_x$), the three gyrometer sensors being arranged according to a trihedron, and **in that** the equipment is an electronic imaging apparatus with image processing means, including at least image rotation processing, and **in that** the calculation means of the system further allow correcting and controlling the rotation of the image so as to suppress the effect of vehicle roll based on the measurements of equipment rate of roll rotation ($m_x$) and on the equipment attitude estimation ($\overline{q}$).

10. The system according to any one of claims 1 à 8, **characterized in that** it is configured for a positioner including three controlled axis-orientation means, a first one of the pan/horizontal type, a second one of the tilt/vertical type and third one in roll (x), said roll orientation means including an angle encoder producing angle measurements ($\theta_r$) for said control axis, the positioner including three gyrometer sensors for said three axes and producing measurements of equipment rate of rotation ($m_y$, $m_z$, $m_x$), the three gyrometer sensors being arranged according to a trihedron, and **in that** the command of orientation is about said three axes.

11. A method of stabilization of a motorized-axis equipment positioner, the positioner being oriented under the action of a command of orientation following a line of sight/pointing, said positioner being installed on a vehicle, the vehicle undergoing movements referred to as bearing movements, the equipment positioner including angle encoders producing angle measurements ($\theta_p$, $\theta_t$) for its controlled axes and a set of gyrometer sensors producing measurements of equipment instantaneous rates of rotation ($m_y$, $m_z$), said gyrometer sensors exhibiting biases ($p_y$, $p_z$), the positioner including gyrometer sensors for at least two axes (y) (z) of the equipment reference system, the positioner including a calculation unit with intra-positioner means for servo control-correction of the instantaneous rates of rotation of the equipment using measurements and the command of orientation to stabilize the equipment following the line of sight,
a means for measuring the vehicle attitude, giving measurements of attitude of the vehicle, being installed in the vehicle,
**characterized in that** calculation means are implemented to control the positioner according to a control law that allows correcting the biases ($\hat{p}_y$, $\hat{p}_z$) thanks to vehicle attitude information and **in that** a state observer combining an equipment attitude estimation ($\overline{q}$) and the measurements of equipment rates of rotation ($m_y$, $m_z$) is implemented therein, in order to determine the biases of the gyrometer sensors of the positioner and to correct them within the control law, and **in that** the equipment attitude estimation ($\overline{q}$) is obtained, in the calculation means, by calculation directly based on the vehicle attitude measurements ($\Psi$, $\theta$, $\Phi$) and the angle measurements ($\theta_p$, $\theta_t$) of the controlled positioning axes of the positioner.

12. A method according to claim 11, **characterized in that** a vehicle that is pre-equipped with a motorized-axis equipment positioner, is used.

13. A method according to claim 11, **characterized in that** a vehicle that was not equipped is equipped with a motorized-axis equipment positioner, a means for measuring the vehicle attitude and calculation means.

Fig. 1

Fig. 2

Fig. 3

Fig. 4

Fig. 5

Fig. 6

Fig. 7

Fig. 8

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 2345155 A
- US 6396235 B